# EUROPEAN PATENT SPECIFICATION

(11) **EP 2 441 571 B1**
(45) Date of publication and mention of the grant of the patent: **25.09.2013**
(21) Application number: 11184435.3
(22) Date of filing: 07.10.2011
(51) Int. Cl.: B29C 70/34

(54) **Proces for manufacturing a composite component**
Verfahren zur Herstellung eines faserverbundbauteils
Procédé pour la fabrication d'un composant composite en fibres

(30) Priority: 12.10.2010 US 902331
(43) Date of publication of application: 18.04.2012
(73) Proprietor: General Electric Company, Schenectady, NY 12345 (US)
(72) Inventor: Driver, Howard Daniel, Greenville, SC South Carolina 29615 (US); Livingston, Jamie Thomas, Greenville, SC South Carolina 29615 (US)
(74) Representative: Williams, Andrew Richard

(56) References cited:
- US-A- 4 720 255
- US-A1- 2008 181 781

## Description

### BACKGROUND OF THE INVENTION

The present invention generally relates to processes for production of composite components. More particularly, this invention is directed to composite components fabricated from multiple plies of prepregs and whose shapes include in-plane curvature, an example of which is a spar cap for an airfoil.

The maturation of composite technologies has increased the opportunities for the use of composite materials in a wide variety of applications, including but not limited to airfoil components such as blades used in wind turbines and aircraft engines. Historically, the fabrication of components from composite materials has been driven by the desire to reduce weight, though increases in metal costs have also become a driving factor for some applications.

Composite materials generally comprise a fibrous reinforcement material embedded in a matrix material, such as a polymer or ceramic material. The reinforcement material serves as the load-bearing constituent of the composite material, while the matrix material protects the reinforcement material, maintains the orientation of its fibers and serves to dissipate loads to the reinforcement material. Polymer matrix composite (PMC) materials are typically fabricated by impregnating a fabric with a resin, followed by curing. Prior to impregnation, the fabric may be referred to as a "dry" fabric and typically comprises a stack of two or more fiber layers (plies or sheets). Depending on the intended application and the matrix material used, the fiber layers may be formed of a variety of materials, nonlimiting examples of which include carbon (e.g., graphite), glass (e.g., fiberglass), polymer (e.g., Kevlar®), and ceramic (e.g., Nextel®) fibers.

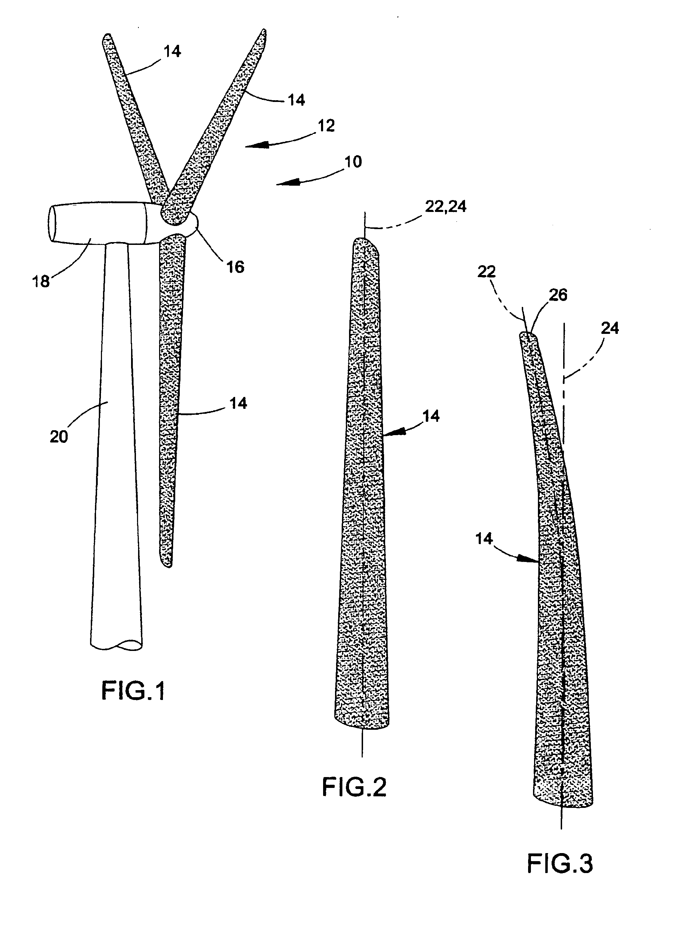

FIG. 1 schematically represents a wind turbine 10 as a nonlimiting example of an application in which PMC materials have found use. The turbine 10 generally includes a rotor blade assembly 12 comprising multiple blades 14 radially extending from a hub 16. The hub 16 is typically connected to a drive train (not shown), which in turn is connected to an electric generator housed within a nacelle 18 mounted on a tower 20. lnstallations for turbines of the type represented in FIG. 1 will often include control systems to monitor and control the operation and performance of the turbine 10. including the pitch and speed of the blades 14. For example, the blade pitch can be controlled by rotating the blades 14 about their pitch axes. Rotor blade assemblies of wind turbines of the type represented in FIG. 1 are often very large, with diameters on the order of about thirty meters or more. As such, the blades 14 and the overall operation of the turbine 10 benefit from manufacturing the blades 14 to be lightweight yet stiff, and are therefore often fabricated from PMC materials.

The blades 14 represented in FIG. 1 may have a variety of shapes and/or configurations. As one example, FIG. 2 represents a blade 14 having a "straight" configuration, such that the entire blade 14 and its span-wise axis 22 essentially lie on a radial of the turbine rotor blade assembly 12. The span-wise axis 22 of the blade 14 roughly coincides with the blade's pitch axis 24, which as used herein is the torsional axis of the blade 14 around which the blade 14 twists.

FIG. 3 schematically represents a blade 14 having a swept configuration, which as used herein refers to the presence of in-plane curvature, in other words, curvature in a plane parallel to the width (chord) of the blade 14. As evident from FIG. 3. a swept configuration results in at least part of the span-wise axis 22 of the blade 14 lying off of the pitch axis 24 of the blade 14. The blade 14 represented in FIG. 3 generally includes a forward sweep near its midspan and an aft sweep at its blade tip 26, much like the shape of a boomerang. Such a blade 14 is disclosed in U.S. Patent No. 7,344,360. However, swept configurations also exist in which the blade 14 may have only an aft sweep or only a forward sweep. Swept blade configurations of the type represented in FIG. 3 provide significant benefits relating to structural efficiency. Depending on the particular configuration of the blade 14 and its sweep, the blade 14 is capable of mitigating loads, and thereby minimizing material mass and costs, by facilitating twisting about its pitch axis 24 under wind load. In particular, the swept configuration of the blade 14 in FIG. 3 is capable of mitigating loads by coupling twisting and bending of the blade 14 to make the blade 14 "nose down" when subjected to excessive loads.

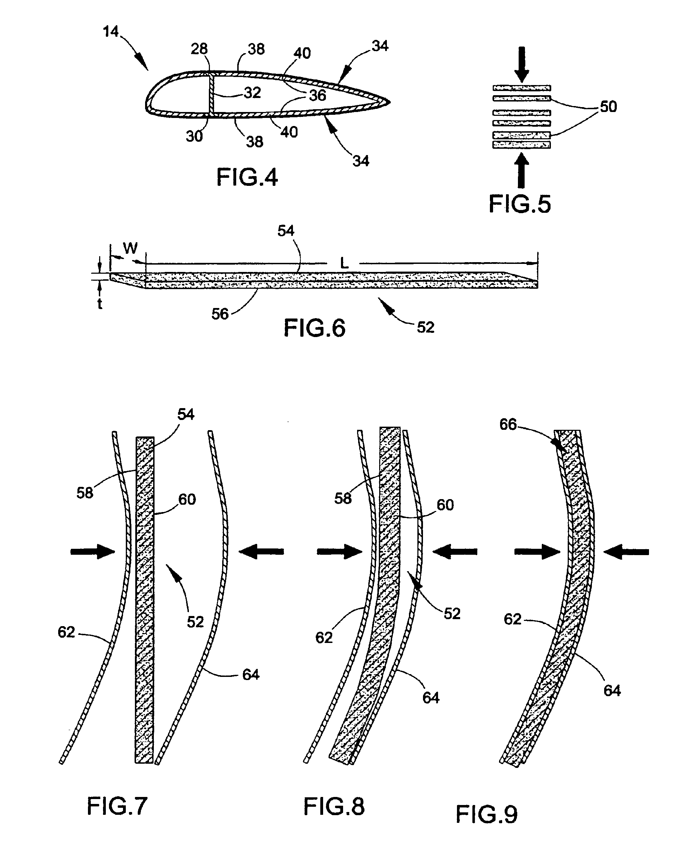

FIG. 4 schematically represents a cross-section of the blade 14 of FIG. 3. As represented, the blade 14 includes a pair of load-bearing spar caps 28 and 30, each extending nearly the entire longitudinal length (span) of the blade 14 from its root to its tip 26. The construction of the blade 14 further includes a shear web 32 between and connected to the spar caps 28 and 30, and a shell 34 that defines the exterior aerodynamic foil shape of the blade 14. The shell 34 is represented in FIG. 4 as comprising two members, each comprising an inner skin 36, an outer skin 38, and a lightweight core 40 (or other stiffening features) therebetween. As represented in FIG. 4, the spar caps 28 and 30 may also be sandwiched between the inner and outer skins 36 and 38. The spar caps 28 and 30 and shear web 32 serve as structural members to increase the strength of the blade 14, similar to an I-beam. As such, the I-beam defined by the spar caps 28 and 30 and shear web 32 is typically fabricated and installed in the blade 14 to coincide with the span-wise axis 22 of the blade 14, such that the spar caps 28 and 30 and shear web 32 generally have approximately the same configuration (e.g., straight or swept) as the blade 14 in which it is installed. Furthermore, to minimize the weight of the blade 14, the spar caps 28 and 30, shear web 32, and skins 36 and 38 are typically fabricated from PMC materials. For example, spar caps 28 and 30 have typically been constructed from glass fiber-reinforced PMC materials, though the trend is to fabricate larger blades 14 from carbon fiber-reinforced PMC materials to save weight and reduce downstream loads. If fabricated from a PMC material, the fibrous reinforcement material within each cap 28 and 30 preferably comprises continuous fibers that are oriented within the cap 28/30 to be parallel to the longitudinal length of the cap 28/30, which facilitates an optimized structural capability.

Because the size, shape, and weight of wind turbine blades are factors in the energy efficiency of the wind turbine, the trend is to increase the length of blades and optimize their shape while minimizing weight. Because increased length increases weight unless appropriate measures are taken, advances in wind turbine blade design have involved reducing the density of the composite materials used to fabricate a blade. However, reduced weight brings challenges in terms of the structural integrity of a blade. In the case of the wind blade spar caps (for example, the spar caps 28 and 30 of FIG. 4) for use in the swept blade design (for example, the blade 14 of FIG. 3), significant challenges relating to weight and cost are encountered when manufacturing long beams (for example, about thirty to about ninety meters) with rectangular cross-sections with greater width than thickness, for example, by a ratio of about 10 to 1, and having defined therein curvature (constant or variable) in the plane of the spar defined by its width.

Whether a PMC material is suitable for a given application depends on the structural requirements of the application as well as the feasibility of fabricating a PMC article to have the required geometry. Common practice for the manufacturing of PMC spar caps has been by wet lay-up of resin-impregnated fiberglass rovings or resin infusion of primarily zero degree woven or knitted fabrics. As blade lengths become longer, carbon fiber-reinforced composite materials become advantageous over glass fiber-reinforced composite materials due to their superior mechanical properties. However, carbon fiber PMCs do not yield optimum composite properties if manufactured by conventional glass fiber PMC processes. A notable alternative process used to fabricate wind turbine spar caps from carbon fiber PMC materials involves the use of multiple layers of a "prepreg," which is typically a tape-like preform comprising the reinforcement material (for example, continuous fibers) in a partially-cured polymer matrix material, for example, a thermosetting resin such as epoxy. Prepregs for PMC structures may be formed by impregnating individual layers of unidirectional continuous non-crimped carbon fibers with a resin to create a generally two-dimensional composite laminate architecture. Hollowing impregnation, each composite laminate typically undergoes consolidation, densification, and partial curing ("B-staging") of the polymer matrix material to provide stability and a desirable tack level. The resulting prepregs can be temporarily stored until needed, at which time multiple plies of prepreg are stacked in a mold and debulked to form a laminate preform, a process referred to as "lay-up." Following lay-up, the laminate preform undergoes additional consolidation, densification and final curing within the mold to form the desired PMC component, such that the mold determines the final geometry of the component. Suitable thicknesses for the individual laminates and the resulting PMC component depend on the particular application of the composite structure being produced.

The prepreg process described above for fabricating carbon-fiber PMC components has typically required the use of production methods such as automated tape lay-up (ATL) or automated fiber placement (AFP) methods. However, existing automated lay-up machines do not accommodate PMC components having lengths needed for wind turbine blades and the capital costs for such equipment can be prohibitive. As a result, manual lay-up methods are more commonly used to produce wind blade spar caps. Even so, significant difficulties are encountered when fabricating PMC spar caps and other long PMC beams from prepregs containing continuous fiber composites due to the resistance of the prepregs to in-plane curvature. Though some PMC beams initially formed by the lay-up process to have a flat straight configuration can be easily formed or shaped by conventional methods to have out-of-plane curvature (in a plane perpendicular to the width of the beam), stiff prepreg laminates resist conforming to compound curvatures and particularly in-plane curvatures, within the result that individual plies within the composite structure tend to warp, wrinkle, buckle or otherwise become distorted when attempting to produce a spar cap for a blade having a swept configuration, such as of the type represented in FIG. 3.

Accordingly, various solutions have been proposed for producing swept wind turbine blades formed from PMC materials, often with the intent of avoiding or at least minimizing warping and distortion, though often with inadequate results.
US 4720255 describes a technique where a straight length of tape is confined in a cavity having a thickness and width the same as that of the tape. The cavity is defined by upper and lower opposing sets of thin flexible strips which are positioned with their faces abutting each other and their inner side edges confronting the inner side edges of the strips in the other set to define the thickness of the cavity therebetween. A series of longitudinally spaced clamps press the strips against the tape to exert on the tape pressure of sufficient magnitude and uniformity to prevent buckling and wrinkling of the tape. With the tape confined, a series of longitudinally spaced drive units bend the strips and tape into a desired planform configuration. The tape is held confined in this planform configuration until it stabilizes in its new configuration.

### BRIEF DESCRIPTION OF THE INVENTION

The method of the present invention provides composite components that can be fabricated from multiple plies of prepregs to have shapes with in-plane curvature and, optionally, out-of-plane curvature, a nonlimiting example of which is a spar cap for an airfoil having a swept configuration.

According to the invention, a process for fabricating a composite component as defined in claim 1 includes forming multiple prepregs, with each prepreg having a laminate architecture containing a fibrous reinforcement material in a matrix of a partially-cured polymer material. The multiple prepregs are stacked and then consolidated to bond the multiple prepregs together to form a straight elongate preform having a length in a longitudinal direction of the preform, a width in a transverse direction of the preform, and a thickness in a direction perpendicular to the longitudinal and transverse directions. The length of the elongate shape is greater than its width, and its width is greater than its thickness. A curvature is then induced in the preform within a plane containing the longitudinal and transverse directions of the preform so as to create a swept configuration. The curvature is induced by applying forces parallel to the transverse direction of the preform while subjecting the preform to a temperature of less than the melting temperature of the polymer material so as to cause the polymer material to cold flow at a creep rate velocity without causing warpage or distortion of the preform and the multiple prepregs therein. The polymer material is then fully cured to yield the composite component and retain the swept configuration thereof.

A significant advantage of this invention is the ability to produce a continuous fiber-reinforced composite component having sufficient in-plane curvature, and optionally also out-of-plane curvature, that would ordinarily result in warping and distortion of the composite component. According to a preferred aspect of the invention, the fabrication process takes advantage of the ability of a preform formed by laying-up and consolidating a stack of fiber-reinforced prepreg plies, and more particularly a B-staged (partially cured) thermoset resin within the preform, to cold-flow in a controlled manner at creep rate speeds to enable an initially straight preform to be formed to obtain a desired in-plane curvature.

Other aspects and advantages of this invention will be better appreciated from the following detailed description.

### BRIEF DESCRIPTION OF THE DRAWINGS

FIG. 1 schematically represents a wind turbine in accordance with the existing art and representative of an application for the present invention.

FIGS. 2 and 3 schematically represent plan views of wind turbine blades having straight and swept configurations as types known in the art.

FIG. 4 schematically represents a cross-sectional view of the wind turbine blade of FIG. 3.

FIG. 5 schematically represents a plurality of prepregs that are aligned for stacking to produce a preform suitable for use in the fabrication of a swept blade in accordance with an embodiment of the invention.

FIG. 6 schematically represents a preform produced with the prepregs of FIG. 5.

FIGS. 7 through 9 represent steps performed in a process for creating in-plane curvature within the preform of FIG. 6 in accordance with an embodiment of the present invention.

FIGS. 10 and 11 represent alternative processes for creating in-plane curvature within the preform of FIG. 6 in accordance with additional embodiments of the present invention.

FIG. 12 represents yet another alternative process for creating in-plane curvature within a preform in accordance with an embodiment of the present invention.

### DETAILED DESCRIPTION OF THE INVENTION

The present invention will be described in reference to the wind turbine 10 of FIG. 1, and in particular to wind turbine blades 14 of the type represented in FIGS. 3 and 4. More specifically, the invention will be described in reference to a PMC process for producing spar caps of a wind turbine blade, such as the spar caps 28 and 30 represented in FIG. 4. However, the invention is also well suited for the fabrication of essentially any PMC component, and particularly PMC components that are fabricated from a unidirectional (or mostly unidirectional) composite preform and have a high aspect ratio (a length much greater than its maximum section dimension). Other notable examples include the composite caps of any I-beam of types found in airplane wings and helicopter rotors, as well as composite caps for I-beams used in a wide range of other applications.

With reference to FIGS. 1 and 3, it can be appreciated that the blade 14 may have a high aspect ratio. A particular but nonlimiting example for the blade 14 is to have a length of greater than 30 meters, for example, about 30 to 90 meters, a width of about 20 to about 160 cm, and a thickness of about 1 to about 10 cm. Furthermore, and as explained in the previous discussion of FIG. 3, the blade 14 has a swept configuration, resulting in at least part of the span-wise axis 22 of the blade 14 being non-coincident with the blade's pitch axis 24. The sweep of the blade 14 is represented as including a forward sweep near the midspan of the blade 14 and an increasingly greater aft sweep at its blade tip 26, though other swept configurations are also within the scope of this invention, including the presence of only an aft sweep or only a forward sweep. In addition to the in-plane curvature corresponding to the swept configuration evident in FIG. 3, the blade 14 may also have out-of-plane curvature (perpendicular to the curvature visible in FIG. 3). Finally, the blade 14 may be constructed similar to that shown in FIG. 4. and therefore comprise a pair of load-bearing spar caps 28 and 30, a shear web 32 between and connecting the spar caps 28 and 30, and a shell 34 that defines the exterior aerodynamic foil shape of the blade 14. Other aspects of the blade l4, including its construction, installation in a wind turbine 10, and operation of the turbine 10 are discussed in reference to FIGS. 1 through 4 or are otherwise known in the art, and therefore will not be discussed here in any detail.

As was previously described in reference to FIG. 4, the spar caps 28 and 30 are located near, along or preferably coincident with the span-wise axis 22 of the blade 14, and extend generally along nearly the entire longitudinal length (span) of the blade 14 from its root to its tip 26. Accordingly, each spar cap 28 and 30 must have a curvature along its length. Furthermore, such curvature preferably corresponds to the curvature of the blade 14 that results in the desired swept configuration for the blade 14.

Because the spar caps 28 and 30 serve as structural members to increase the strength and stiffness of the blade 14 while minimally contributing to the weight of the blade 14, the spar caps 28 and 30 are preferably fabricated from a PMC material comprising a fiber reinforcement material within a polymer matrix material. As used herein, the term "fiber" may be an individual filament or a bundle of filaments (tow). The fiber reinforcement material is preferably continuous fibers, and at least some if not essentially all of the fibers are preferably oriented within each spar cap 28 and 30 to be parallel to the longitudinal axis of the cap 28 or 30, and therefore also approximately parallel to the span-wise axis 22 of the blade 14. Additional fibers, including fibers disposed transverse to the other fibers, can be placed at strategic locations within the spar caps 28 and 30 to reinforce and/or stabilize the fiber architecture and/or increase the stiffness of the spar caps 28 and 30. In all cases, additional fibers can be provided at selected locations within the spar caps 28 and 30 to meet thickness, stiffness and strength requirements of the caps 28 and 30 and the blade 14 as a whole. Preferred continuous fibers for use as the reinforcement material of the spar caps 28 and 30 include carbon (e.g., graphite) fibers. However, the use of other or additional fiber materials is also within the scope of the invention, for example, glass (e.g., fiberglass), and aramid (e.g.. Kevlar®) fibers.

Whereas the fiber reinforcement material serves as the load-bearing constituent of the PMC material and spar caps 28 and 30 formed therewith, the polymer matrix material protects the reinforcement material, maintains the orientation of its fibers, and serves to dissipate loads to the reinforcement material. The matrix material also contributes to the structural strength and other physical properties of the cap spars 28 and 30, and as such the resin used to form the matrix should have mechanical and physical properties suitable for the intended application. In addition, the resin should be compositionally compatible with the fiber reinforcement material and be capable of curing under temperature conditions that will not thermally degrade or otherwise be adverse to the fiber reinforcement material. On this basis, thermosetting resins, most notably epoxies, are particularly suitable resin materials for use as the matrix material of the spar caps 28 and 30. However, the use of other polymer materials is also within the scope of the invention, for example, polyester and vinylester thermoset resins and numerous thermoplastic resins including nylon, polyethylene, polypropylene, etc.

As represented in FIGS. 5 and 6, preferred embodiments for fabricating the cap spars 28 and 30 involve the use of multiple prepregs 50, each in the form of a sheet, ply or tape-like preforms comprising the reinforcement material and the polymer matrix material in a partially-cured state. The prepregs 50 may be formed by impregnating individual layers of fibers, such as unidirectional continuous non-crimped fibers, with the resin to create a generally two-dimensional composite laminate architecture. Following impregnation, each composite laminate typically undergoes consolidation, densification, and partial curing ("B-staging") of the polymer matrix material to provide stability and a desirable tack level for the prepreg 50. Suitable thicknesses for the individual prepregs 50 and the number of prepregs 50 required to obtain a desired thickness for the spar cap 28 or 30 (or other composite component) will depend on the particular application of the composite component being produced.

A laminate preform 52 (FIG. 6) is then formed by laying-up and debulking multiple plies or layers of the prepregs 50 in a mold (not shown). Typical lay-up processes including manual lay-up, automated tape lay-up (ATL) and automated fiber placement (AFP) methods, typical consolidation and densification processes including vacuum bagging, and typical B-staging processes to partially cure the resin are all well known in the art and therefore will not be discussed in any detail here. At the completion of the lay-up and debulking processes, the polymer matrix material within the preform 52 and in which the fibers are embedded is not fully cured, but instead is only partially cured. At this point, the preform 52 may have a flat, straight elongate shape, as generally represented in FIG. 6.

In preferred embodiments of the invention, the preform 52 has a flat, straight elongate shape similar to that represented in FIG. 6. The preform 52 has a length (L) substantially equal to or greater than the desired length of the spar 28 or 30, and a width (W) and thickness (t) substantially equal to the desired width and thickness of the spar 28 or 30. As previously noted, after the lay-up process the polymer matrix material of the preform 52 is not fully cured, but instead is only partially cured. Following lay-up, the laminate preform 52 may undergo additional consolidation and/or densification, such as by vacuum bagging, but in contrast to prior art processes does not yet undergo final curing. Instead, the preform 52 is transferred to an apparatus adapted to induce an in-plane curvature in the preform 52 to substantially obtain the desired final shape of the cap spar 28 or 30. One such approach is represented in FIGS. 7 through 9 as utilizing a pair of rigid forms 62 and 64, one to either longitudinal side 58 and 60 of the preform 52. Each of the rigid forms 62 and 64 has a longitudinal shape coinciding with the curvature desired from the corresponding side 58 or 60 of the preform 52. such that the forms 62 and 6.1 cooperate to determine the final geometry of the caps 28 and 30.

As evident from FIGS. 7 through 9, the forms 62 and 64 are positioned to impose forces that are in-plane to the preform 52, in other words, parallel to the widthwise in-plane surfaces 54 and 56 of the preform 52 between its opposite longitudinal sides 58 and 60, and therefore transverse to the lengthwise direction of the preform 52. Though the continuous fiber reinforcement material original incorporated into the prepregs 50 and subsequently oriented parallel to the lengthwise direction of the preform 52 poses relatively minor resistance to forming or shaping the preform 52 to have out-of-plane curvature (in a plane perpendicular to the in-plane surfaces 54 and 56 of the preform 52), the stiff prepregs 50 and their reinforcement material create significant difficulties when attempting to induce in-plane curvature into the long preform 52 due to their resistance to in-plane deformation, to the extent that warping, wrinkling, buckling and other forms of distortion are likely to occur when attempting to produce a spar cap 28 and 30 for a swept blade 14 of the type represented in FIG. 3. However, investigations leading to the present invention have determined that such resistance to in-plane deformation can be overcome if in-plane deformation forces are applied while the preform 52 is still in a partially-cured stated, and if the deformation forces are applied at creep rate velocities such that the partially-cured polymer matrix material cold flows within the preform 52. In this regard, the preform 52 is preferably not heated to the extent that the polymer matrix material melts and becomes a liquid, as doing so would result in severe distortion and loss of control of fiber organization, straightness and columnarity at the ply (prepreg) level and for the entire preform 52. Instead, the present invention relies on the stability provided by the partially-cured (B-staged) polymer matrix material to maintain order during the inducement of the curvature in the preform 52. Therefore, any heating of the preform 52 is preferably carried out to maintain temperatures within the preform 52 that are sufficiently below the melting point of the polymer matrix material to avoid liquefying the polymer matrix.

In view of the above, the preform 52 is preferably consolidated with the forms 62 and 64 at appropriate levels of heat and vacuum (if necessary or desired), and deformation forces are applied by the forms 62 and 64 to very slowly change the shape of the preform 52, yielding the elongate shape 66 depicted in FIG. 9. The process is preferably sufficiently slow so to allow the stresses of formation to be relaxed by cold flow of the partially-cured polymer matrix material into permanent but harmless shear strain. Shear stresses are maintained below the threshold at which warping or buckling or any out-of-plane distortions would occur. Suitable creep rate velocities, which can be regulated to maintain an acceptable state of stresses within the preform 52, may be determined empirically or controlled by feedback from sensors (not shown) on or in the preform 52. Depending on the materials and construction of the preform 52, a wide variety of creep rate velocities are believed to be possible and effective. The mechanism used to apply the deformation forces to the preform 52 through the forms 62 and 64 may be pneumatically-operated, hydraulically-operated, spring-operated and/or bladder-operated, as well as employ any other actuator capable of applying the appropriate forces at appropriate rates, temperatures and sequences to induce the desired in-plane curvature without causing any undesirable distortions in the preform 52. The resulting elongate shape 66 (FIG. 9) can then undergo any further processing that may be necessary or desired to complete the fabrication of the intended spar cap 28 or 30 (or any other desired PMC component).

The tolerance of the preform 52 to stresses without warping can be significantly increased by increasing the thickness (t) of the preform. Accordingly, the deformation process represented in FIGS. 7 through 9 is preferably carried out on the preform 52 whose thickness is approximately that of the desired thickness of the spar cap 28 or 30, as opposed to being carried out on a single prepreg 50. While the process is preferably carried out on the preform 52 at full thickness (t), it is foreseeable that the process could be carried out on a partial preform formed from a stack of prepregs 50 (module) whose combined thickness is less than the desired thickness of the spar cap 28 or 30. The resulting partial preform can then be assembled with and bonded or otherwise attached to other partial preforms produced in the same manner to form the final shape 66 and, ultimately, the intended spar cap 28 or 30 or any other desired PMC component.

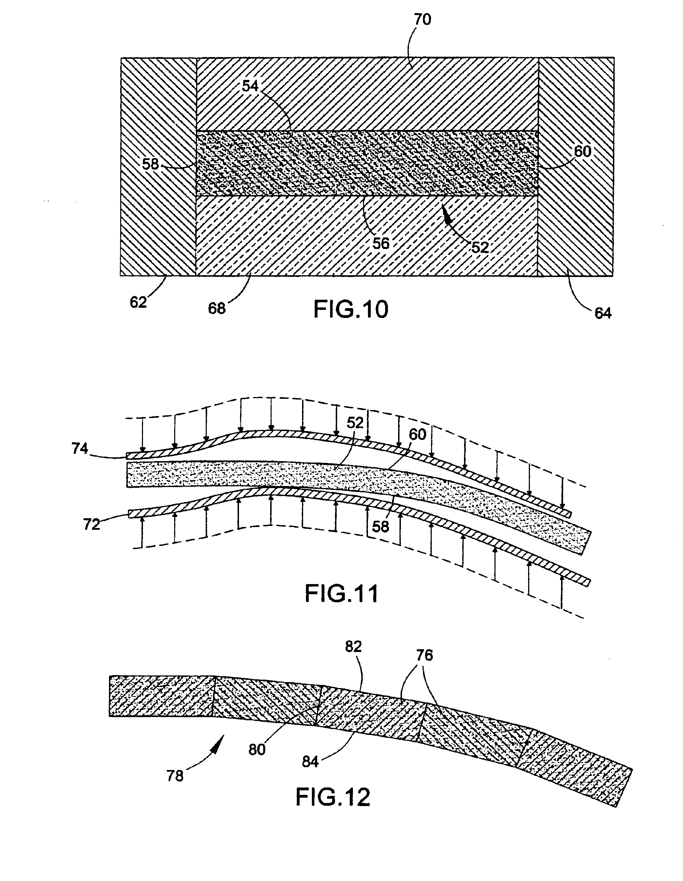

FIG. 10 is a cross-sectional view of the preform 52 and forms 62 and 64 of FIGS. 7 through 9, showing additional components that can be employed to promote the distribution of forces and minimize the tendency for the preform 52 to be subjected to localized flattening, narrowing, crushing, and/or other form of distortion. In FIG. 10, the preform 52 rests on a pliable base 68 and is optionally subjected to opposing pressure applied by a punch 70. In some embodiments, the punch 70 may be shaped and apply forces to produce out-of-plane curvature in the final shape 66 and, therefore, the intended spar cap 28 or 30 or any other desired PMC component.

An alternative approach represented in FIG. 11 utilizes a pair of nonrigid pliable forms 72 and 74, one to either longitudinal side 58 and 60 of the preform 52. Each pliable form 72 and 74 is sufficiently pliable to enable its interior edge facing the preform 52 to acquire a longitudinal shape coinciding with the curvature desired from the corresponding side 58 or 60 of the preform 52, such that the forms 72 and 74 cooperate to determine the final geometry of the elongate shape 66. A benefit of the pliable forms 72 and 74 is the ability to spread the forces required to deform the preform 52, while also allowing for the production of final preforms 66 having different curvatures. The pliable forms 72 and 74 may be elastically deformed by an actuating mechanism (not shown), for example, a series of templates, cams or computer-controlled devices, to obtain the desired longitudinal shape. As with the previous embodiment of FIGS. 7 through 10, the deformation process represented in FIG. 11 is carried out while the polymer matrix material of the preform 52 is still in a partially-cured stated, and the deformation forces are applied at creep rate velocities such that the partially-cured polymer matrix material cold flows within the preform 52.

In the embodiments discussed above in reference to FIGS. 5 through 11, the preform 52 has been described as defining a spar cap 28 or 30 in its entirety, such that the in-plane curvature induced in the preform 52 defines the in-plane curvature of the elongate shape 66 in its entirety. FIG. 12 represents an alternative embodiment in which multiple flat straight preform segments 76 are produced and used to produce a spar cap 28 or 30 or another desired PMC component. The segments 76 are arranged end-to-end and secured to each other with butt joint splices 80 to form a segmented preform 78 whose longitudinal edges 82 and 84 approximate the desired in-plane curvature for the PMC component. As such, the segmented preform 76 defines the PMC component in its entirety, while the plurality of preform segments 76 define the swept configuration of the component in its entirety. It is foreseeable that the segmented preform 76 could undergo further shaping to define a more uniform in-plane curvature in accordance with any of the embodiments shown in FIGS. 7 through 11.

In each of the above embodiments, it may be desirable for the preform 52 to by laid-up to contain some prepregs 50 whose reinforcement material is off-axis (up to 90 degrees) relative to the reinforcement material of the other prepregs 50 used to form the preform 52. Alternatively, a dry fabric or tape having off-axis reinforcement material to could be incorporated into the preform 52. In either case, the off-axis reinforcement material may be employed to promote the transverse stiffness of the preform 52 and prevent narrowing of the preform 52 during the deformation process. The reinforcement material of these additional layers or plies may be continuous fibers similar to that described for the prepregs 50, or may be chopped or continuous fibers in random mats or woven or knitted fabrics designed to boost transverse stiffness, while not significantly increasing the in-plane shear stiffness of the preform 52 so as not to resist the curvature to be induced in the preform 52.

While the invention has been described in terms of specific embodiments, it is apparent that other forms could be adopted by one skilled in the art. Therefore, the scope of the invention is to be limited only by the following claims.

## Claims

1. A process of fabricating a composite component (28,30) to have a swept configuration, the process comprising:
forming multiple prepregs (50), each prepreg (50) having a laminate architecture containing a fibrous reinforcement material in a matrix of a partially-cured polymer material;
stacking the multiple prepregs (50);
consolidating the multiple prepregs (50) to bond the multiple prepregs (50) together to form a straight elongate preform (52) having a length in a longitudinal direction of the preform (52), a width in a transverse direction of the preform (52), and a thickness in a direction perpendicular to the longitudinal and transverse directions, wherein the length is greater than the width and the width is greater than the thickness;
inducing an in-plane curvature in the preform (52) within a plane containing the longitudinal and transverse directions of the preform (52) so as to create a swept configuration, the inducing step comprising applying forces parallel to the transverse direction of the preform (52) while subjecting the preform (52) to a temperature of less than the melting temperature of the polymer material so as to cause the polymer material to cold flow at a creep rate velocity without causing warpage or distortion of the preform (52) and the multiple prepregs (50) therein; and then
fully curing the polymer material to yield the composite component (28,30) and retain the swept configuration thereof.

2. The process according to claim 1, **characterized in that** the forces applied during the inducing step are applied by first and second rigid forms (62,64) that have rigid profiles coinciding with the in-plane curvature induced in the preform (52) and are brought into contact with opposite longitudinal edges (58,60) of the preform (52).

3. The process according to claim 1 or claim 2, further comprising contacting and restraining at least one surface (54,56) of the preform (52) disposed between the opposite longitudinal edges (58,60) of the preform (52) with at least a first pliable form (68) so as to inhibit out-of-plane distortions in the preform (52) during the inducing step.

4. The process according to any preceding claim, **characterized in that** the forces applied during the inducing step are applied by first and second pliable rails (72,74) that are brought into contact with longitudinal edges (58,60) of the preform (52) and are then elastically distorted in the transverse direction to induce the in-plane curvature in the preform (52).

5. The process according to any one of claims 1 to 4, **characterized in that** the preform (52) defines the composite component (28,30) in its entirety and the in-plane curvature induced in the preform (52) defines the swept configuration in its entirety.

6. The process according to any one of claims 1 to 5, **characterized in that** the composite component (28,30) is a spar cap (28,30) of an airfoil (14).

7. The process according to any preceding claim, further comprising bonding the spar cap (28,30) and a second spar cap (28,30) to a shear web (32) to form an I-beam structure, and then installing the I-beam structure in the airfoil (14).

8. The process according to any preceding claim, **characterized in that** the airfoil (14) is a wind turbine blade (14), the length of the composite component (28,30) is at least ten times greater than the width thereof, and the width of the composite component (28,30) is at least ten times greater than the thickness thereof.

## Patentansprüche

1. Verfahren zum Herstellen einer Verbundstoffkomponente (28, 30) dergestalt, dass sie eine geschwungene Ausgestaltung hat, wobei das Verfahren die Schritte aufweist:
Erzeugen mehrerer Prepregs (50) (angehärteter Elemente), wobei jedes Prepreg (50) einen Laminataufbau hat, der ein Faserverstärkungsmaterial in einer Matrix eines teilweise gehärteten Polymermaterials enthält;
Übereinanderschichten der mehreren Prepregs (50);
Zusammendrücken der mehreren Prepregs (50), um die mehreren Prepregs (50) miteinander zur Ausbildung einer geraden länglichen Vorform (52) mit einer Länge in einer Längsrichtung der Vorform (52), einer Breite in einer Querrichtung der Vorform (52) und einer Dicke in einer Richtung rechtwinklig zu der Längs- und Querrichtung zu verbinden, wobei die Länge größer als die Breite und die Breite größer als die Dicke ist;
Bewirken einer ebeneninternen Krümmung in der Vorform (52) in einer die Längs- und Querrichtung der Vorform (52) beinhaltenden Ebene, um so eine geschwungene Ausgestaltung zu erzeugen, wobei der Bewirkungsschritt die Aufbringung von Kräften parallel zu der Querrichtung der Vorform (52) unter gleichzeitiger Aussetzung der Vorform (52) an eine Temperatur unter der Schmelztemperatur des Polymermaterials aufweist, um so einen Kaltfluss des Polymermaterials bei einer Kriechgeschwindigkeit ohne Auslösen eines Verzugs oder einer Verformung der Vorform (52) und der mehreren Prepregs (50) darin zu bewirken; und dann
vollständiges Aushärten des Polymermaterials, um die Verbundstoffkomponente (28, 30) zu erzeugen und deren geschwungene Ausgestaltung beizubehalten.

2. Verfahren nach Anspruch 1, **dadurch gekennzeichnet, dass** die während des Bewirkungsschrittes aufgebrachten Kräfte durch eine erste und zweite starre Form (62, 64) aufgebracht werden, die starre Profile haben, die mit der in der Vorform bewirkten ebeneninternen Krümmung übereinstimmen und mit gegenüberliegenden Längsrändern (58, 60) der Vorform (52) in Kontakt gebracht werden.

3. Verfahren nach Anspruch 1 oder Anspruch 2, ferner mit dem Schritt der Berührung und des Festhaltens wenigstens einer Oberfläche (54, 56) der zwischen den gegenüberliegenden Längsrändern (58, 60) der Vorform (52) angeordneten Vorform (52) mit wenigstens einer ersten nachgiebigen Form (68), um ebenenexterne Verzerrungen in der Vorform (52) während des Bewirkungsschrittes zu verhindern.

4. Verfahren nach einem der vorstehenden Ansprüche, **dadurch gekennzeichnet, dass** die während des Bewirkungsschrittes aufgebrachten Kräfte durch eine erste und zweite nachgiebige Schiene (72, 74) aufgebracht werden, die mit Längsrändern (58, 60) der Vorform (52) in Kontakt gebracht werden und dann elastisch in der Querrichtung verformt werden, um die ebeneninterne Krümmung in der Vorform (52) zu bewirken.

5. Verfahren nach einem der Ansprüche 1 bis 4, **dadurch gekennzeichnet, dass** die Vorform (52) die Verbundstoffkomponente (28, 30) in ihrer Gesamtheit definiert und die in der Vorform (52) bewirkte ebeneninterne Krümmung die geschwungene Ausgestaltung in ihrer Gesamtheit definiert.

6. Verfahren nach einem der Ansprüche 1 bis 5, **dadurch gekennzeichnet, dass** die Verbundstoffkomponente (28, 30) ein Holmgurt (28, 30) eines Schaufelblattes (14) ist.

7. Verfahren nach einem der vorstehenden Ansprüche, ferner mit dem Schritt der Verklebung des Holmgurtes (28, 30) und eines zweiten Holmgurtes (28, 30) mit einem Scherungssteg (32), um eine I-Trägerstruktur auszubilden, und dann des Einbaus der I-Trägerstruktur in das Schaufelblatt (14).

8. Verfahren nach einem der vorstehenden Ansprüche, **dadurch gekennzeichnet, dass** das Schaufelblatt (14) ein Windkraftanlagenblatt (14) ist, die Länge der Verbundstoffkomponente (28, 30) wenigstens zehnmal größer als ihre Breite ist, und die Breite der Verbundstoffkomponente (28, 30) wenigstens zehnmal größer als ihre Dicke ist.

## Revendications

1. Procédé de fabrication d'un élément composite (28, 30) pour obtenir une configuration en flèche, le procédé comprenant :
le formage de préimprégnés multiples (50), chaque préimprégné (50) présentant une architecture stratifiée contenant un matériau de renfort fibreux dans une matrice d'une matière polymère partiellement durcie;
l'empilage des préimprégnés multiples (50);
la consolidation des préimprégnés multiples (50) pour lier les préimprégnés multiples (50) ensemble, en vue de former une préforme (52) allongée rectiligne, ayant une longueur dans une direction longitudinale de la préforme (52), une largeur dans une direction transversale de la préforme (52) et une épaisseur dans une direction perpendiculaire aux directions longitudinale et transversale, la longueur étant supérieure à la largeur, et la largeur étant supérieure à l'épaisseur;
la production d'une courbure dans le plan de la préforme (52), dans un plan contenant les directions longitudinale et transversale de la préforme (52), de manière à créer une configuration en flèche, l'étape de production comprenant l'application de forces parallèles à la direction transversale de la préforme (52), tout en soumettant la préforme (52) à une température inférieure à la température de fusion de la matière polymère, de façon à amener la matière polymère à effectuer un fluage à froid à une vitesse de fluage, sans provoquer le gauchissement ou la déformation de la préforme (52) et des préimprégnés multiples (50) dans celle-ci; et ensuite
la cuisson complète de la matière polymère pour faire fluer l'élément composite (28, 30) et maintenir la configuration en flèche de celui-ci.

2. Procédé selon la revendication 1, **caractérisé en ce que** les forces appliquées au cours de l'étape de production sont appliquées par des première et deuxième formes rigides (62, 64) qui présentent des profils rigides, coïncidant avec la courbure dans le plan produite dans la préforme (52), et sont amenées en contact avec des bords (58, 60) longitudinaux opposés de la préforme (52).

3. Procédé selon la revendication 1 ou la revendication 2, comprenant en outre la mise en contact et le maintien d'au moins une surface (54, 56) de la préforme (52) disposée entre les bords (58, 60) longitudinaux opposés de la préforme (52), avec au moins une première forme (68) souple, de manière à empêcher des déformations hors du plan dans la préforme (52) au cours de l'étape de production.

4. Procédé selon l'une quelconque des revendications précédentes, **caractérisé en ce que** les forces appliquées au cours de l'étape de production sont appliquées par des premier et deuxième rails (72, 74) souples qui sont amenés en contact avec des bords (58, 60) longitudinaux de la préforme (52) et sont ensuite soumis à une déformation élastique dans la direction transversale pour produire la courbure dans le plan dans la préforme (52).

5. Procédé selon l'une quelconque des revendications 1 à 4, **caractérisé en ce que** la préforme (52) définit l'élément composite (28, 30) dans son ensemble, et la courbure dans le plan produite dans la préforme (52) définit la configuration en flèche dans son ensemble.

6. Procédé selon l'une quelconque des revendications 1 à 5, **caractérisé en ce que** l'élément composite (28, 30) est une semelle de longeron (28, 30) d'une surface portante (14).

7. Procédé selon l'une quelconque des revendications précédentes, comprenant en outre la fixation de la semelle de longeron (28, 30) et d'une deuxième semelle de longeron (28, 30) à une âme de cisaillement (32) pour former une structure de poutre en I, et ensuite l'installation de la structure de poutre en I dans la surface portante (14).

8. Procédé selon l'une quelconque des revendications précédentes, **caractérisé en ce que** la surface portante (14) est une pale d'éolienne (14), la longueur de l'élément composite (28, 30) est au moins dix fois supérieure à sa largeur, et la largeur de l'élément composite (28, 30) est au moins dix fois supérieure à son épaisseur.
